(19) Europäisches Patentamt
European Patent Office
Office européen des brevets

(11) **EP 4 672 661 A1**

(12) **EUROPEAN PATENT APPLICATION**

(43) Date of publication:
**31.12.2025 Bulletin 2026/01**

(21) Application number: **24306046.4**

(22) Date of filing: **28.06.2024**

(51) International Patent Classification (IPC):
***H04L 9/00*** *(2022.01)* ***H04L 9/08*** *(2006.01)*

(52) Cooperative Patent Classification (CPC):
**H04L 9/002; H04L 9/0861;** H04L 2209/34

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Commissariat à l'Energie Atomique et aux Energies Alternatives**
**75015 Paris (FR)**

(72) Inventor: **LOISEAU, ANTOINE**
**38054 GRENOBLE CEDEX 9 (FR)**

(74) Representative: **Lavoix**
**2, place d'Estienne d'Orves**
**75441 Paris Cedex 09 (FR)**

(54) **OPTIMIZED BIT FLIPPING KEY ENCAPSULATION POST-QUANTUM CRYPTOGRAPHIC METHOD**

(57) Optimized BIKE method (200) comprising: setting (210) system parameters and Hash functions; generating (220) a public key ( $\widetilde{pk}$ ) and a private key ( $\widetilde{sk}$ ); encapsulating (230) a message (m) into a ciphertext (c) using the public key, and computing a pseudo-message (K) using the message and the ciphertext; and, decapsulation (240) the ciphertext using the private key to retrieve the pseudo-message. The method computes a product between first and second operands of a size n binary polynomial type by way of a pointwise product between first and second transformed operands resulting in an AFFT like function applied to the first and second operands respectively, so that at least one element among the first private element ($\ddot{h}_0$) of the private key ( $\widetilde{sk}$ ) or the single public element ($\ddot{h}$) of the public key ( $\widetilde{pk}$ ) is a vector in the AFFT domain.

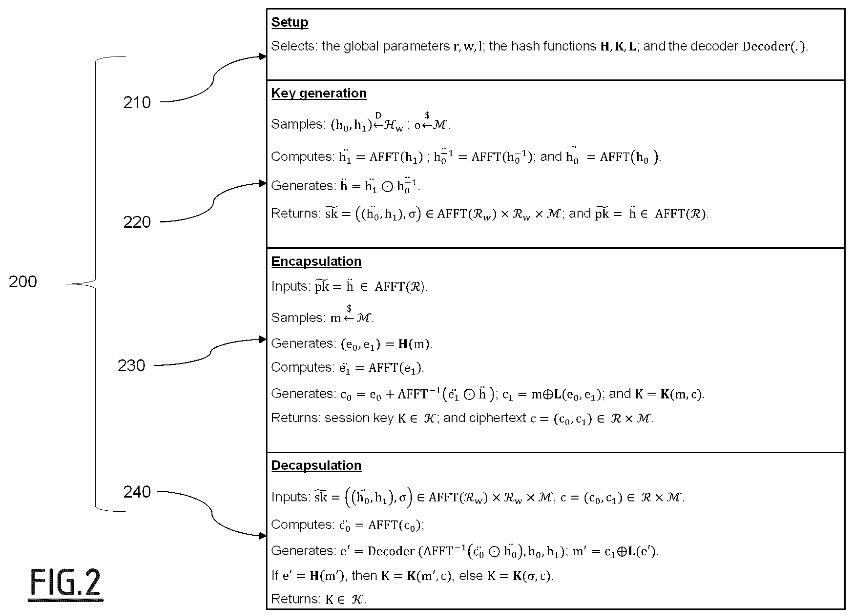


FIG.2

EP 4 672 661 A1

## Description

The present invention concerns post-quantum cryptographic methods based on Error-Correcting Codes, in particular post-quantum cryptographic methods belonging to the Bit Flipping Key Encapsulation - BIKE scheme type.

Asymmetric cryptographic methods are well-known. When two end devices, generally referred to as Alice and Bob, want to share a secret message (in particular an encryption key to be used for securing further exchanges), an asymmetric cryptographic method can be realized to transfer this message from Bob to Alice. Generally speaking, Alice generates a pair of keys, comprising a private key and a public key. Alice transmits her public key to Bob. Bob encrypts the message with Alice's public key and transmits the ciphertext to Alice. Alice retrieves the original message from the ciphertext using her private key. Thus, Bob and Alice now share the message.

However, it is thought that the basic asymmetric cryptographic methods, that are currently widely used, could be broken by a quantum algorithm running on a quantum computer.

It is the reason why new asymmetric cryptographic methods are looked after that could resist attacks by quantum algorithms. This asymmetric cryptographic methods are called post-quantum cryptographic methods.

Among the post-quantum cryptographic methods that have been identified to date, the Bit Flipping Key Encapsulation - BIKE scheme, that belongs to the specific group of post-quantum cryptographic methods based on Error-Correcting Code - ECC, could be standardized in the near future by the National Institute of Standards and Technology - NIST.

The BIKE scheme is presented in details in the article N. Aragon et al., « BIKE: Bit Flipping Key Encapsulation », publishes on 10 October 2022, which corresponds to the fourth round of standardization of the BIKE scheme. This article can be downloaded at the URL: "https://csrc.nist.gov/Projects/post-quantum-cryptography/round-4-submissions".

As explained in this article, the BIKE scheme uses the Niederrieter framework to perform the encryption and make the choice of a QC-MDPC (Quasi-Cyclic Moderate Parity Check) code C as error correcting code. For this kind of code, an efficient algorithm Decoder(.) is known. It is described in BIKE's specification.

Following the notations used in this article, an embodiment of the BIKE scheme is illustrated in Figure 1.

The BIKE scheme 100 has four successive steps:

- In the setup step 110, the system parameters r, w, l of the algorithm are set. The hash functions **H, K, L** are selected. The decoder function Decoder is selected.
- In the key generation step 120, performed by Alice, a pair of keys is computed, made up of a public encapsulation key pk and a private decapsulation key sk. In addition to some of the system parameters, this step of the BIKE scheme uses additional parameters: $\sigma$ is randomly selected in the set $\mathcal{M} = \{0,1\}^1$, and the pair $(h_0,h_1)$ is randomly selected, based on a uniform distribution D, in the set $\mathcal{H}_w$, with $\mathcal{H}_w = \mathcal{R}_w \times \mathcal{R}_w$ (where $\mathcal{R}$ is the set of the binary words having a size of n = 2r bits, and $\mathcal{R}_w$ is the sub-set of $\mathcal{R}$ gathering the binary words having exactly w bits equal to 1). In the BIKE scheme the private decryption key sk is a triplet of binary words $h_0$ of size n, $h_1$ of size n, and $\sigma$ of size 1, while the public encryption key pk is a binary words h of size n. h is the result of $h_1 . h_0^{-1}$, where $h_0^{-1}$ is the inverse of polynomial $h_0$. The operator "."will be discussed in more details below.
- In the encapsulation step 130, performed by Bob, a ciphertext c is computed based on the message m to be exchanged with Alice (m is a binary word of l bits randomly selected in the set $\mathcal{M}$). The ciphertext c is of pair of binary words of size n, $c_0$ and $c_1$. In the BIKE scheme, a pair $(e_0, e_1)$ is obtained by applying the Hash function **H** on the message m. $c_0$ of the ciphertext c is then the sum of $e_0$ and $e_1$. h, while $c_1$ is the bit to bit ("XOR") sum $\oplus$ of the message m and the Hash function **L** applied on $e_0$ and $e_1$. Finally the pseudo-message, also called the session key K of set $\mathcal{K} = \{0,1\}^1$ is a binary word of size 1 is obtained by applying the Hash function **L** on m and c.
- In the decapsulation step 140, performed by Alice on reception of the ciphertext c sent by Bob, the pseudo-message K is retrieved using the private decryption key sk known from Alice only. To this end the algorithm Decoder(.) is applied on $c_0$. $h_0$, $h_0$ and $h_1$ to compute e'. Then m' is computed as the bit to bit sum $\oplus$ of $c_1$ and the Hash function **L** applied on e'. Finally, when the Hash function **H** applied on m' is equal to e', the pseudo-message K is retrieved by applying the Hash function **K** on m' and c. Otherwise, the pseudo-message K is retrieved by applying the Hash function **K** on $\sigma$ and c.

The BIKE scheme presents very promising properties in terms of robustness against attacks, error correction, and so on.

However, the BIKE scheme is relatively burdensome in terms of computation time or memory footprint.

In particular, the operator "." corresponds to the product of two binary polynomials, whose size n depends on the level of security that is chosen.

Indeed, a word of n bits is mathematically equivalent to a binary polynomial of degree n-1, whose coefficient of degree i (i integer between 0 and n-1) is equal to the value of bit i+1 of the associated word.

In computer science, the product of polynomials is a major issue, in particular when the degree of the polynomials to handle is high, as this is the case in the BIKE scheme.

Consequently, the $h_1.h_0^{-1}$ product in the key generation step, the $e_1.h$ product in the encaplusation step, and the $c_0.h_0$ product in the decapsulation step of the BIKE scheme impose an heavy computational load.

This is a major bottleneck in particular when the BIKE scheme is implemented in a lightweight computing device, such as a smart card or a microcontroller, whose microprocessor has limited capacities, or in a server, for example of a bank's computer system, having to deal with a huge number of cryptographic requests at the same time.

There is thus a need to optimize the BIKE scheme to minimize its impact in terms of computation time or memory footprint and respect the constraints imposed by the intended platforms on which to deploy it.

The invention therefore aims at providing an optimized BIKE scheme.

To this end, an aspect of the invention is an optimized BIKE method implemented by first and second end points in order to share a message m, the method comprising successively: setting system parameters and Hash functions; generating, for the first end point, based on the system parameters and the Hash functions, a pair of keys, the pair of keys comprising a public key $\widetilde{pk}$and a private key $\widetilde{sk}$, the public key being shared with the second end point; encapsulating, by the second end-point, the message into a ciphertext c using the public key, computing a pseudo-message K using the message and the ciphertext, and transmitting the ciphertext to the first end point; and, decapsulation by the first end point the ciphertext using the private key to retrieve the pseudo-message, the private key being made up of a first private element, a second private element and a third private element, and the public key being made up of a single public element, the method involving at least one product between a first operand and a second operand, the first operand and the second operand each being a binary polynomial equivalent to a binary string of size n, characterized in that the method computes the at least one product by way of a pointwise product between a first transformed operand and a second transformed operand, the first transformed operand resulting in an Additive Fast Fourier Transform - AFFT like function applied to the first operand and the second transformed operand resulting in the AFFT like function applied to the second operand, the first transformed operand and the second transformed operand each being a vector in an AFFT domain, said vector in the AFFT domain being equivalent to a binary string of size 2n, and in that at least one element among the first private element $\ddot{h}_0$ of the private key $\widetilde{sk}$ or the single public element ($\ddot{h}$ of the public key $\widetilde{pk}$ is a vector in the AFFT domain.

Another aspect of the invention is relative to a system comprising a first end point and a second end point, the system being adapted to realize the previous optimized BIKE method.

Another aspect of the invention is relative to a smart card adapted to be used as the first end point of the previous system to realize the step of generating a pair of keys and the step of decrypting a ciphertext according to the previous optimized BIKE method.

Another aspect of the invention is relative to a server adapted to be used as the second end point of the previous system to realize the step of encrypting a message to output a ciphertext according the previous optimized BIKE method.

Another aspect of the invention is relative to a non-transient information recording medium, comprising programming providing instructions to instantiate all or any of the steps of the previous optimized BIKE method, when those instructions are executed by the first end point or the second end point of the previous system.

Another aspect of the invention is a computer program product allowing, when its code is run by a computer system, to realize all or some steps of the previous method.

The invention and its advantages will be better understood upon reading the following description of a preferred embodiment thereof, provided solely by way of example, this description being made with reference to the accompanying drawings, in which:

- Figure 1 shows an embodiment of the BIKE scheme according to the prior art;
- Figure 2 shows an embodiment of the optimized BIKE scheme according to the invention; and,
- Figure 3 is a computer system for implementing the optimized BIKE scheme of Figure 2.

The invention relies on a class of transformation functions, which is broadly referred to as the Additive Fast Fourier Transforms - AFFTs.

AFFT is a known class of techniques for multiplying binary polynomials.

There are several variants of AFFT in the literature.

Among them, the "classical" AFFT is presented in the article S. Gao et T. Mateer, «Additive Fast Fourier

Transform over Finite Fields».

A particular AFFT, called the Frobenius Fast Fourier Transform - FFFT, is presented in J. v. d. Hoeven et R. Larrieu, «The Frobenius FFT,» 2017.

Another particular AFFT, called the Truncated Additive Frobenius Fast Fourier Transform - TAFFFT, is presented in W.-D. Li, M.-S. Chen et P.-C. Kuo, «Frobenius Additive Fast Fourier Transform,» 2018 or in M.-S. Chen, C.-M. Cheng, P.-C. Kuo, W.-D. Li

et B.-Y. Yang, «Multiplying boolean Polynomials with Frobenius Partitions in Additive Fast Fourier Transform», 2018.

Generally speaking, an AFFT allows the binary polynomial product "a.b" to be performed by changing the representation of the operands a and b in order to move in a reciprocal space, where the product is easier to compute.

More specifically, we have the relation:

$$\mathrm{a.b} = \mathrm{AFFT}^{-1}(\mathrm{AFFT}(\mathrm{a}) \odot \mathrm{AFFT}(\mathrm{b})) \qquad (1)$$

where : "." Is the operator for the binary polynomial product; AFFT(a) is the Additive Fast Fourier Transform of binary polynomial a ; AFFT(b) is the Additive Fast Fourier Transform of polynomial b ; "⊙" is the operator for the pointwise multiplication ; and $\mathrm{AFFT}^{-1}$ is the Additive Fast Fourier inverse Transform, or inverse AFFT ($a = \mathrm{AFFT}^{-1}(\mathrm{AFFT}(a))$).

This relation means that it is equivalent to perform the binary polynomial product between a and b or to perform first an AFFT on both a and b to shift into the AFFT domain, to perform the pointwise multiplication between AFFT(a) and AFFT(b) in the AFFT domain, and to perform finally an inverse AFFT on the result of AFFT(a) Q AFFT(b).

If operand a is a binary word of size n, its transform, ä = AFFT(a), is a vector belonging to the AFFT domain. The number of coordinates of this vector but also the dimension of each coordinate vary depending of a block parameter of the AFFT. However, each coordinate is a binary string, so that a vector in the AFFT domain is equivalent of a binary word, more precisely a binary word of size 2n.

The pointwise multiplication simply consists in multiplying the coordinates of AFFT(a) and AFFT(b), i.e. for each value of j (j integer between 1 and the number of coordinates of the vectors in the AFFT domain), in multiplying the coordinate j of vector AFFT(a) with the coordinate j of vector AFFT(b).

The result AFFT(a) Q AFFT(b) is still a vector in the AFFT domain.

The inverse AFFT applied on the result of the pointwise product gives the value of the n bits word a. b.

However, in terms of computational load, for two operands of size n, while the computation of the binary polynomial product requires of the order of $\mathcal{O}(n^2)$ operations, the computation via the AFFT domain according to equation (1) requires only $\mathcal{O}$ (n.log(n)) operations.

In terms of CPU cycle time for performing one product of two operands of size n, the following results are obtained:

| Size of each operand | Cycle time with AFFT $AFFT^{-1}(AFFT(a) \odot AFFT(b))$ | Cycle time without AFFT *a. b* |
|---|---|---|
| n=17669 | 9680 | 18000 |
| n=35851 | 21130 | 86100 |
| n=57637 | 21130 | 157400 |

However, the invention goes further by efficiently integrating AFFTs and inverse AFFTs into the BIKE cryptographic protocols in order to gain on redundant transforms. In other words, the invention proposes to keep certain variables in the AFFT domain between steps of the BIKE scheme and to transfer them between Alice and Bob, rather than their equivalent binary words. This will avoid having to perform an inverse transform on one variable at one end point, and the corresponding transform at the other end point. This will then reduce further the computational load of the algorithm.

Following the notations used in Figure 1, a preferred embodiment of the optimized BIKE scheme according to the invention is presented in Figure 2.

In the optimized BIKE scheme 200, the setup step 210 is not altered compare to the setup step 110 of the BIKE scheme 100 according to the state of the art.

The key generation step 220 is altered by computing the AFFTs of $h_1$ $h_0^{-1}$ and $h_0$, respectively. The transforms of these variables are denoted $\ddot{h}_1, \ddot{h}_0^{-1}$ and $\ddot{h}_0$ , respectively.

The private and public keys are now defined as $\widetilde{\mathrm{sk}} = ((\ddot{\mathrm{h}}_0, \mathrm{h}_1), \sigma)$ and $\widetilde{\mathrm{pk}} = \ddot{\mathrm{h}}$,with $\ddot{\mathrm{h}}$ the mere pointwise sum of $\ddot{\mathrm{h}}_1$ and $\ddot{\mathrm{h}}_0^{-1}$.

The public key $\widetilde{\mathrm{pk}}$ is shared with Bob.

The encapsulation step 230 is also altered by computing the AFFT of $e_1$, referred to as $\ddot{e}_1$. In optimized BIKE scheme 200, the first term $c_0$ of the ciphertext c is computed by pointwise summing $\ddot{e}_1$ and $\ddot{h}$, applying the inverse AFFT on the result, and addition $e_0$.

The ciphertext c is transmitted to Alice.

The decapsulation step 240 is altered by computing the AFFT of $c_0$. The algorithm Decoder(.) is applied on three terms. The first term is computed by pointwise summing $\ddot{c}_0$ and $\ddot{\mathrm{h}}_0$ and applying the inverse AFFT on the result. The second and third terms are not altered compared to standard BIKE scheme.

Figure 1 shows that, between the key generation step 120 and the encapsulation step 130, the binary polynomial h is used in two different products. Thus, by using $\ddot{h}$ rather than h in the public key $\widetilde{\mathrm{pk}}$, an additional calculation of the AFFT of h is avoided in the encapsulation step 230.

Similarly, Figure 1 shows that, between the key generation step 120 and the decapsulation step 140, the binary polynomial $h_0$ appears in two products. Thus, by using $\ddot{\mathrm{h}}_0$ rather than $h_0$ in the public key $\widetilde{\mathrm{sk}}$, an additional calculation of the AFFT of $h_0$ is avoided in the encryption step 240.

According to the embodiment of Figure 2, the key generation step 220 involves the computation of three AFFTs and one pointwise multiplication, but one inverse AFFT is spared in the computation of the public key $\widetilde{\mathrm{pk}}$ by staying in the AFFT domain. This corresponds to a reduction of 20% of the computational load for this key generation step when compare to the BIKE scheme of Figure 1.

The encapsulation step 230 involves the computation of one AFFT, one pointwise multiplications, and one inverse AFFT, but one AFFTs is spared for $\ddot{h}$. This corresponds to a reduction of 12 % of the computational load for this encryption step when compare to the BIKE scheme of Figure 1.

The decapsulation step 240 involves one AFFT, one pointwise multiplications, and one inverse AFFT, but one AFFT is spared for $\ddot{h}_0$. This corresponds to a reduction of 18% of the computational load of this decryption step when compare to the BIKE scheme of Figure 1.

In the optimized BIKE scheme, the format of the public and private keys are thus altered:

$$\widetilde{\mathrm{sk}} = ((\ddot{\mathrm{h}}_0, \mathrm{h}_1), \sigma)$$

$$\widetilde{\mathrm{pk}} = \ddot{\mathrm{h}}$$

If the image in the AFFT domain of the set S is denoted AFFT(S), then the private key $\widetilde{\mathrm{sk}}$ now belongs to the set AFFT($\mathcal{R}_w$) $\times$ $\mathcal{R}_w \times \mathcal{M}$ and the public key $\widetilde{\mathrm{pk}}$ now belongs to the set AFFT($\mathcal{R}$).

Since the length of the transformed operand is twice the one of the operand itself, $\widetilde{\mathrm{sk}}$ has a length equal to 3n + l = 6r + l and $\widetilde{\mathrm{pk}}$ has a length equal to 2n = 4r.

Thus with the altered BIKE scheme according to the invention, the keys are longer than in the classical version of the BIKE scheme. Consequently, the size of the pair of keys used in the cryptographic method is a signature of the cryptographic method is the optimized BIKE scheme according to the invention.

Alternative embodiments to the optimized BIKE scheme of Figure 2 are numerous. In particular, the encryption step could involve the computation of $\ddot{c}_0$, defined as $\ddot{c}_0 = \ddot{e}_0 + (\ddot{e}_1 \odot \ddot{h})$. The ciphertext exchanges between the end points is now $\tilde{c} = (\ddot{c}_0, c_1) \in$ AFFT($\mathcal{R}$) $\times$ $\mathcal{M}$. In the decryption step, it is then no longer necessary to compute $\ddot{c}_0$ before generating e'.

Figure 3 is a possible application of the optimised BIKE scheme of figure 2 in a system comprising a first end point and a second end point, in communication one with the other.

In the example of Figure 3, the realization of the optimised BIKE scheme by the system is based on the end points running pieces of software to perform the steps of the cryptographic method. Alternatively, the realization of the optimised BIKE scheme by the system is based on each end points being pieces of hardware properly designed to perform the steps

of the cryptographic method.

More specifically, in Figure 3, the first endpoint, Alice, is the a smart card 10, and the second end point, Bob, is a server 20.

The smart card 10 comprises a chip 12, which includes a microprocessor 14, a memory 16 and an input/output interface 18.

The memory 16 comprises a memory space 17 dedicated to store variables and parameters of the cryptographic method.

The memory 16 also stores various computer programs whose instructions, when executed by the microprocessor 14, provides the smart card 10 with corresponding functionalities.

In particular, the memory 16 stores an application 18 in order to communicate with server 20.

In particular, the memory 16 stores a cryptographic program 15, that includes a decryption module 54, optionally a setup module 51, and optionally a key generation module 52, in order to implement the corresponding steps of the optimized BIKE scheme 200.

Similarly, the server 20 is a computer comprising a processor 24, a memory 26 and an input/output interface 28. The interface 28 is in particular connected to a card reader 30, in which smart cards, like smart card 10, can be inserted to communicate with the server 20.

The memory 26 comprises a memory space 27 dedicated to store variables and parameters of the cryptographic method.

The memory 26 also stores computer programs, whose instructions, when executed by the processor 24, provides the server 20 with corresponding functionalities.

In particular, the memory 26 stores an application 29 in order to communicate with a smart card inserted in the reader 30.

In particular, the memory 26 stores a cryptographic program 25, that includes an encryption module 53, in order to implement the corresponding step of the optimized BIKE scheme 200.

Off line, preferably when the smart card 10 is issued, the set up module 51 is executed to defines the global parameters of the optimized BIKE scheme 200. The values of these global parameters are stored in memory space 17. Alternatively, the global parameter are otherwise set (for example by a standard entity) and stored in memory 17.

Similarly, off line, preferably when the smart card 10 is issued, the key generation module 52 is executed. It reads the values of the global parameters in the memory space 17 and computes the private and public keys, $\widetilde{\mathrm{sk}}$ and $\widetilde{\mathrm{pk}}$. They are then stored into the memory space 17. Alternatively, the keys are otherwise generated (for example by an issuer entity) and stored in memory 17.

Then, on line, i.e. each time the smart card 10 is inserted into a reader, like the reader 30, after an initialisation procedure, the application 19 extracts the global parameters and the public key from the memory 16 and transmits them to the server 20 in a request for a secret message.

On receipt of the request, the application 29 stores the received variables and parameters in memory space 27.

The application 29 then select a message m pre-stored in the memory space

The application 29 launches the execution of the encryption module 53. This module reads the values of the global parameters, the public key and the message in the memory space 27 and computes the cyphertext and the pseudo-message.

This cyphertext is transmitted to the smart card 10, where it is stored in memory 16.

On reception of the ciphertext, the application 19 launches the decryption module 54. It reads the values of the global parameters, the private key and the ciphertext in the memory space 17 and retrieves the pseudo-message K from the ciphertext.

The pseudo-message K is store in memory 16.

The cryptographic method ends. The two end points are now sharing the pseudo-message K. This is a cryptographic key that can be used by each of the end point to cipher and decipher the pieces of data they exchange.

## Claims

1. An optimized Bit Flipping Key Encapsulation post-quantum cryptographic method (200), implemented by first and second end points in order to share a message (m), the method comprising successively:

   - setting (210) system parameters and Hash functions;
   - generating (220), for the first end point (10), based on the system parameters and the Hash functions, a pair of keys, the pair of keys comprising a public key ( $\widetilde{\mathrm{pk}}$ ) and a private key ( $\widetilde{\mathrm{sk}}$ ), the public key being shared with the

second end point (20);
- encapsulating (230), by the second end-point (20), the message into a ciphertext (c) using the public key, computing a pseudo-message (K) using the message and the ciphertext, and transmitting the ciphertext (c) to the first end point; and,
- decapsulation (240) by the first end point the ciphertext using the private key to retrieve the pseudo-message;

the private key being made up of a first private element, a second private element and a third private element, and the public key being made up of a single public element,
the method involving at least one product between a first operand and a second operand, the first operand and the second operand each being a binary polynomial equivalent to a binary string of size n,
**characterized in that** the method computes the at least one product by way of a pointwise product between a first transformed operand and a second transformed operand, the first transformed operand resulting in an Additive Fast Fourier Transform - AFFT like function applied to the first operand and the second transformed operand resulting in the AFFT like function applied to the second operand, the first transformed operand and the second transformed operand each being a vector in an AFFT domain, said vector in the AFFT domain being equivalent to a binary string of size 2n, and **in that** at least one element among the first private element ($\ddot{h}_0$) of the private key ( $\widetilde{sk}$ ) or the single public element (li) of the public key ( $\widetilde{pk}$ ) is a vector in the AFFT domain.

**2.** The optimized Bit Flipping Key Encapsulation post-quantum cryptographic method according to claim 1, wherein the AFFT like function is selected among a classical Additive Fast Fourier Transform, a Frobenius Fast Fourier Transform, a Truncated Additive Frobenius Fast Fourier Transform and the like.

**3.** The optimized Bit Flipping Key Encapsulation post-quantum cryptographic method according to any one of the claims 1 to 2, wherein setting of global parameters consists in selecting a set of system parameters comprising the integers *r, w, l* and a set of Hash functions **H, K, L** ; and wherein generating a pair of keys consists in generating ($h_0$, $h_1$) in the set $\mathcal{H}_w = \mathcal{R}_w \times \mathcal{R}_w$ , and σ in the set $\mathcal{M} = \{0,1\}^l$, computing $\ddot{h}_1 = \mathrm{AFFT}(h_1),\ \ddot{h}_0^{-1} = \mathrm{AFFT}(h_0^{-1})$ , and $\ddot{h}_0 = \mathrm{AFFT}(h_0)$ , and setting the private key $\widetilde{sk}$ as ( $(\ddot{h}_0, h_1), \sigma$ ) and the public key $\widetilde{pk}$ as $\ddot{h} = \ddot{h}_1 \odot \ddot{h}_0^{-1}$ ; where ä = AFFT(a) is the transformed operand resulting in an Additive Fast Fourier Transform - AFFT like function applied to the operand a, Q is the operator of the pointwise product, $\mathcal{R}$ is the set of the binary words having a size of n = 2r bits, and $\mathcal{R}_w$ is the sub-set of $\mathcal{R}$ gathering the binary words having exactly w bits equal to 1.

**4.** The optimized Bit Flipping Key Encapsulation post-quantum cryptographic method according to claim 3, wherein the encapsulation step (230) consists in :

- computing ($e_0$,$e_1$) = H(m), where m is the message, and $\ddot{e}_1 = \mathrm{AFFT}(e_1)$ ;
- setting $c_0 = e_0 + \mathrm{AFFT}^{-1}(\ddot{e}_1 \odot \ddot{h})$ and $c_1 = m \oplus L(e_0,e_1)$, the ciphertext c being defined as ($c_0$,$c_1$); and,
- defining a pseudo-message as K = K(m, c),

and wherein the decapsulation step consists in:

- computing $\ddot{c}_0 = \mathrm{AFFT}(c_0)$;
- generating e' = Decoder ($\mathrm{AFFT}^{-1}(\ddot{c}_0 \odot \ddot{h}_0)$,$h_0$,$h_1$) and m' = $c_1$(⊕L(e'); and,
- if e' = H(m'), returning K = K(m',c), otherwise returning K = K(σ, c).

**5.** System comprising a first end point (10) and a second end point (20), the system being adapted to realize an optimized Bit Flipping Key Encapsulation post-quantum cryptographic method according to any one of claims 1 to 4.

**6.** Smart card adapted to be used as the first end point (10) in the system according to claim 5 to realize the step of generating a pair of keys and the step of decrypting a ciphertext according to the optimized Bit Flipping Key Encapsulation post-quantum cryptographic method according to any one of claims 1 to 4.

**7.** Server adapted to be used as the second end point (20) in the system according to claim 5 to realize the step of encrypting a message to output a ciphertext according the optimized Bit Flipping Key Encapsulation post-quantum

cryptographic method according to any one of claims 1 to 4.

8. A non-transient information recording medium, comprising programming providing instructions to instantiate all or any of the steps of an optimized Bit Flipping Key Encapsulation post-quantum cryptographic method according to any one of claims 1 to 4, when those instructions are executed by the first end point or the second end point of a computing system according to claim 5.

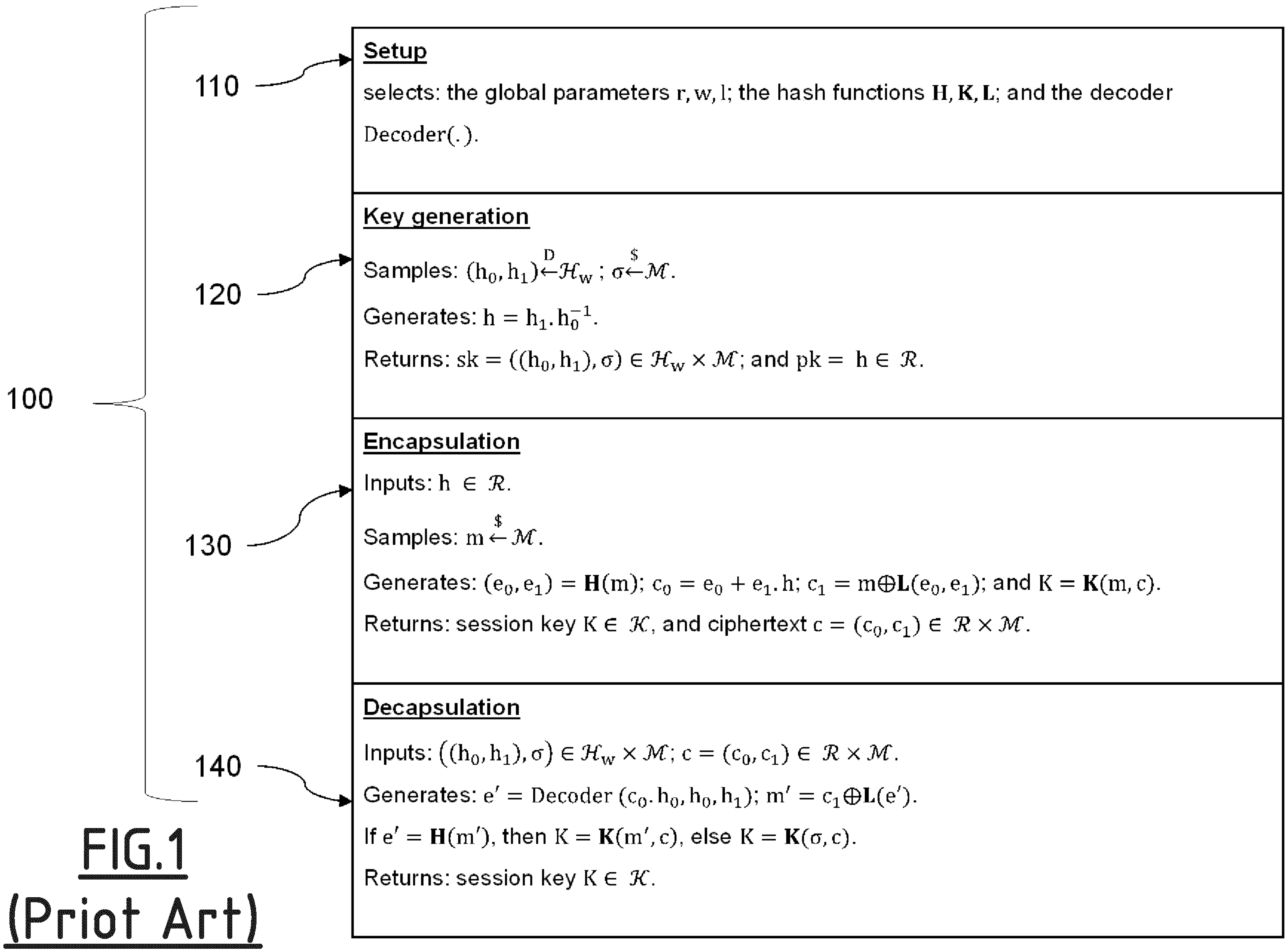


FIG.1
(Priot Art)

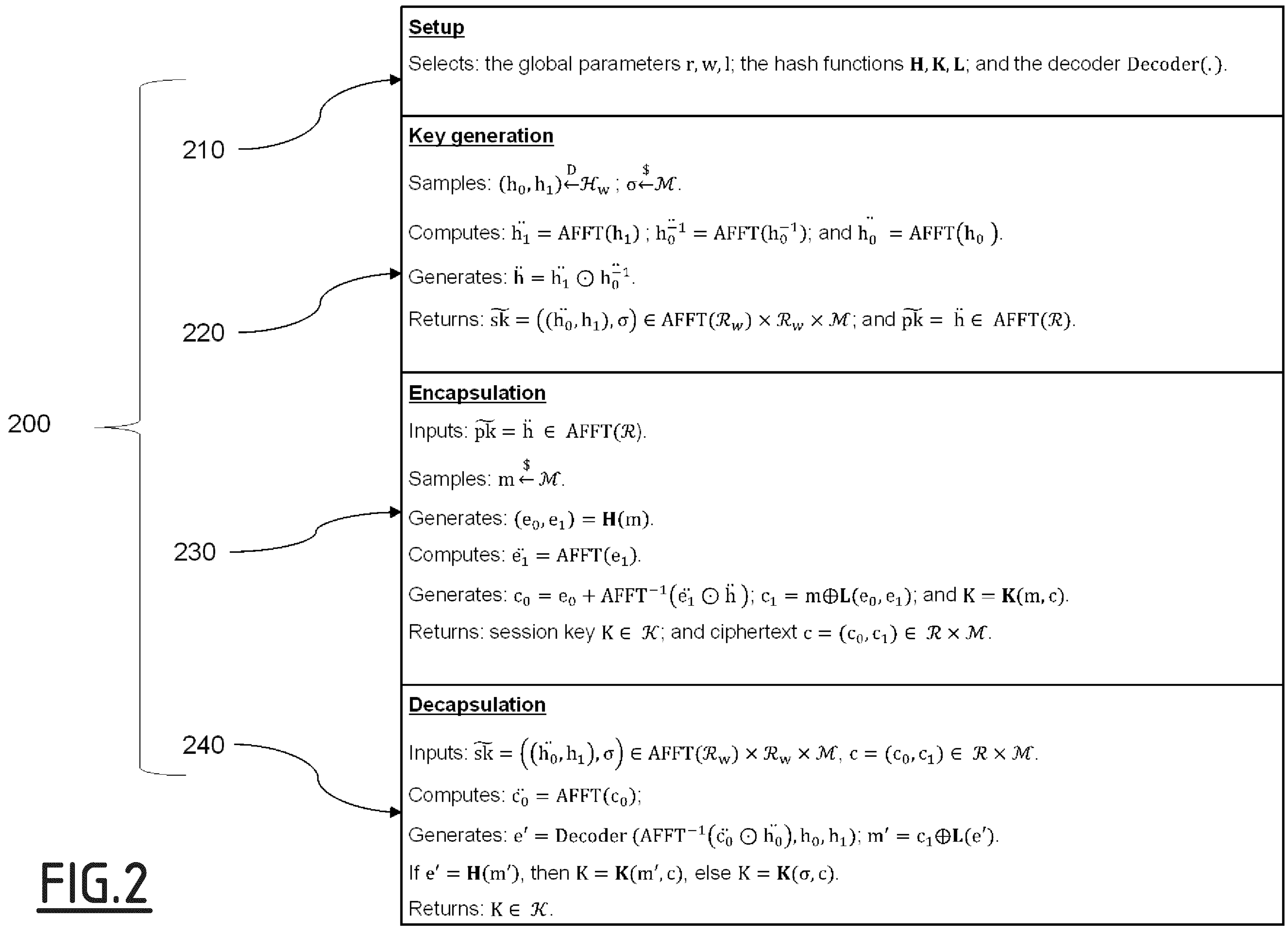
200
210
220
230
240
Setup
Selects: the global parameters $\mathrm{r, w, l}$; the hash functions $\mathbf{H}, \mathbf{K}, \mathbf{L}$; and the decoder $\mathrm{Decoder}(.)$.
Key generation
Samples: $(h_0, h_1) \overset{D}{\leftarrow} \mathcal{H}_w$ ; $\sigma \overset{\$}{\leftarrow} \mathcal{M}$.
Computes: $\ddot{h}_1 = \mathrm{AFFT}(h_1)$ ; $\ddot{h}_0^{-1} = \mathrm{AFFT}(h_0^{-1})$; and $\ddot{h}_0 = \mathrm{AFFT}(h_0)$.
Generates: $\ddot{h} = \ddot{h}_1 \odot \ddot{h}_0^{-1}$.
Returns: $\widetilde{sk} = ((\ddot{h}_0, h_1), \sigma) \in \mathrm{AFFT}(\mathcal{R}_w) \times \mathcal{R}_w \times \mathcal{M}$; and $\widetilde{pk} = \ddot{h} \in \mathrm{AFFT}(\mathcal{R})$.
Encapsulation
Inputs: $\widetilde{pk} = \ddot{h} \in \mathrm{AFFT}(\mathcal{R})$.
Samples: $m \overset{\$}{\leftarrow} \mathcal{M}$.
Generates: $(e_0, e_1) = \mathbf{H}(m)$.
Computes: $\ddot{e}_1 = \mathrm{AFFT}(e_1)$.
Generates: $c_0 = e_0 + \mathrm{AFFT}^{-1}(\ddot{e}_1 \odot \ddot{h})$; $c_1 = m \oplus \mathbf{L}(e_0, e_1)$; and $K = \mathbf{K}(m, c)$.
Returns: session key $K \in \mathcal{K}$; and ciphertext $c = (c_0, c_1) \in \mathcal{R} \times \mathcal{M}$.
Decapsulation
Inputs: $\widetilde{sk} = ((\ddot{h}_0, h_1), \sigma) \in \mathrm{AFFT}(\mathcal{R}_w) \times \mathcal{R}_w \times \mathcal{M}$, $c = (c_0, c_1) \in \mathcal{R} \times \mathcal{M}$.
Computes: $\ddot{c}_0 = \mathrm{AFFT}(c_0)$;
Generates: $e' = \mathrm{Decoder}\,(\mathrm{AFFT}^{-1}(\ddot{c}_0 \odot \ddot{h}_0), h_0, h_1)$; $m' = c_1 \oplus \mathbf{L}(e')$.
If $e' = \mathbf{H}(m')$, then $K = \mathbf{K}(m', c)$, else $K = \mathbf{K}(\sigma, c)$.
Returns: $K \in \mathcal{K}$.

FIG.2

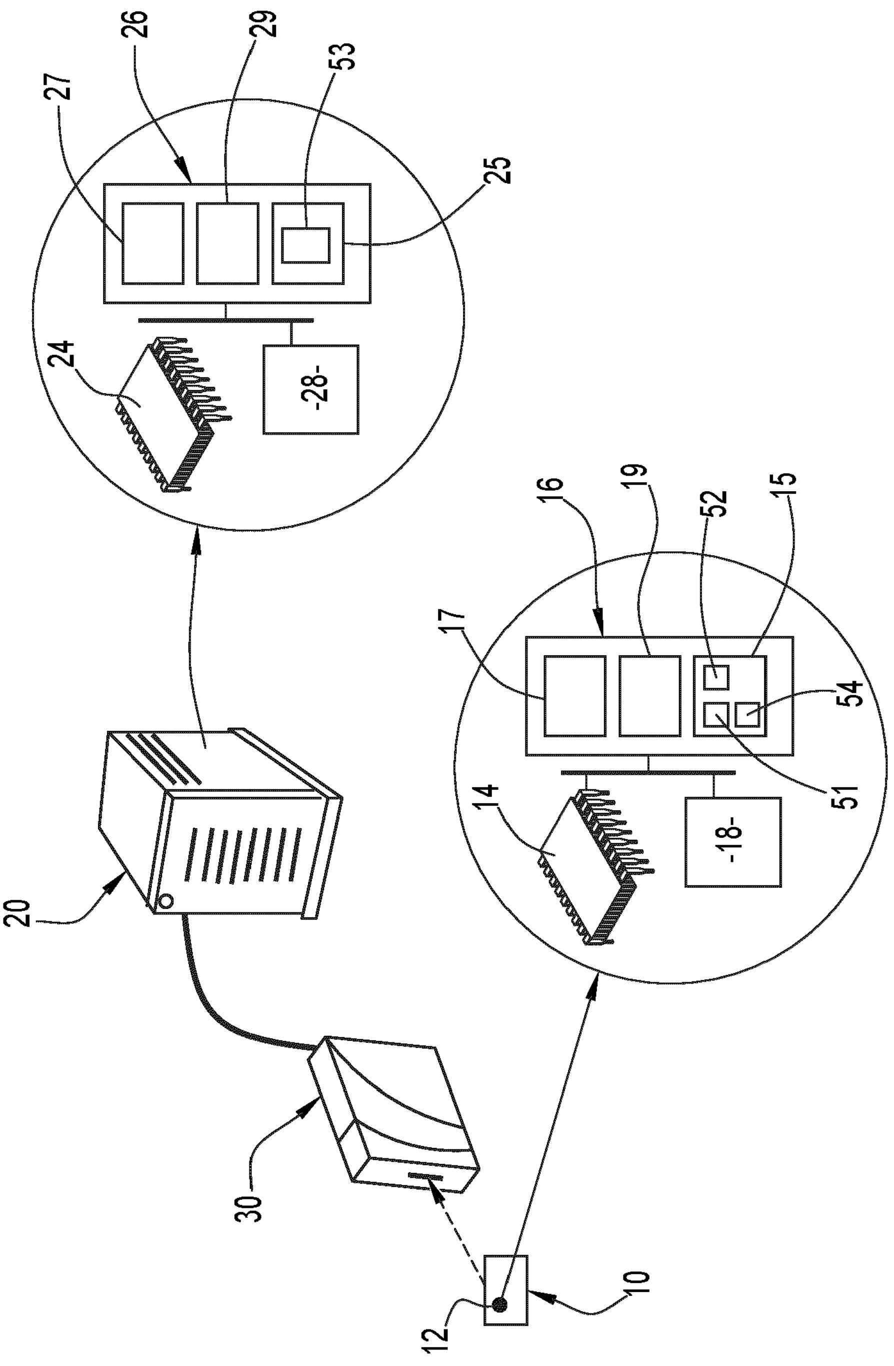


FIG.3

Europäisches Patentamt
European Patent Office
Office européen des brevets

# EUROPEAN SEARCH REPORT

Application Number
EP 24 30 6046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DRAGOI VLAD ET AL: "Survey on cryptanalysis of code-based cryptography: From theoretical to physical attacks", 2018 7TH INTERNATIONAL CONFERENCE ON COMPUTERS COMMUNICATIONS AND CONTROL (ICCCC), IEEE, 8 May 2018 (2018-05-08), pages 215-223, XP033361560, DOI: 10.1109/ICCCC.2018.8390461 [retrieved on 2018-06-19] * abstract * * Chapter I: "Introduction" * * Chapter II: "Preliminaries" * * Chapter III: "Public-key encryption schemes" * * Chapter IV: "Signature schemes" * * Chapter VI: "Main threats" * ----- | 1-8 | INV. H04L9/00 H04L9/08 |
| A | SCHAMBERGER THOMAS ET AL: "A Power Side-Channel Attack on the CCA2-Secure HQC KEM", 29 January 2021 (2021-01-29), SPRINGER, PAGE(S) 119 - 134, XP047581115, * abstract * * Chapter 1: "Introduction" * * Chapter 2: "Preliminaries" * ----- | 1-8 | TECHNICAL FIELDS SEARCHED (IPC) H04L |

The present search report has been drawn up for all claims

| Place of search | Date of completion of the search | Examiner |
|---|---|---|
| Munich | 28 November 2024 | Di Felice, M |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **N. ARAGON et al.** *BIKE: Bit Flipping Key Encapsulation*, 10 October 2022
- **S. GAO** ; **T. MATEER**. *Additive Fast Fourier Transform over Finite Fields*
- **J. V. D. HOEVEN** ; **R. LARRIEU**. *The Frobenius FFT*, 2017
- **W.-D. LI** ; **M.-S. CHEN** ; **P.-C. KUO**. *Frobenius Additive Fast Fourier Transform*, 2018
- **M.-S. CHEN, C.-M. CHENG, P.-C. KUO, W.-D. LI,B.-Y. YANG**. *Multiplying boolean Polynomials with Frobenius Partitions in Additive Fast Fourier Transform*, 2018